# DEMANDE DE BREVET EUROPEEN

(11) **EP 4 570 574 A1**
(43) Date de publication de la demande: **18.06.2025**
(21) Numéro de dépôt: 24218357.2
(22) Date de dépôt: 09.12.2024
(51) Int. Cl.: B60L 15/20, B60L 15/08, H02P 9/48, H02P 27/08

(54) **DISPOSITIF D'ENTRAINEMENT COMPRENANT DEUX MACHINES TOURNANTES**

(30) Priorité: 11.12.2023 FR 2313908
(71) Demandeur: Valeo eAutomotive Germany GmbH, 91056 Erlangen (DE)
(72) Inventeur: JOSEPH, Olivier, 94046 CRETEIL CEDEX (FR); ROUIS, Oussama, 94046 CRETEIL CEDEX (FR)
(74) Mandataire: Valeo Powertrain Systems

(57) **Abrégé**

L'invention vise un dispositif d'entrainement (2) configuré pour entrainer un élément de transmission (4) comprenant :
- une première machine tournante (6) reliée à l'élément de transmission (4), la première machine (4) présentant une première vitesse de transition ;
- une deuxième machine tournante (8) reliée à l'élément de transmission (4), la deuxième machine (8) présentant une deuxième vitesse de transition distincte de la première vitesse de transition ;
- un module de contrôle (10) configuré pour transmettre une commande parmi une première commande et une deuxième commande à la première machine (6) et à la deuxième machine (8), le passage d'une commande à l'autre commande transmise à la première machine tournante (6) étant fonction de la première vitesse et le passage d'une commande à l'autre commande transmise à la deuxième machine tournante (8) étant fonction de la deuxième vitesse.

## Description

### DOMAINE TECHNIQUE

La présente invention concerne le domaine technique des véhicules électriques.

Plus particulièrement, l'invention concerne le domaine technique des dispositifs d'entrainement de roues de tels véhicules électriques.

### ETAT DE LA TECHNIQUE

Il est connu de l'état de la technique un véhicule comprenant un dispositif d'entrainement dans lequel une première machine tournante est configurée pour entrainer en rotation un arbre de transmission solidaire des roues dudit véhicule.

Un tel véhicule comprend par ailleurs un module de contrôle configuré pour transmettre une commande de vitesse à la première machine tournante, permettant ainsi d'optimiser le fonctionnement du dispositif d'entrainement en pilotant la vitesse de rotation de la machine tournante pour un rapport de transmission prédéterminé. Une telle commande prend la forme d'un signal, par exemple un signal à modulation de largeur d'impulsions ou un signal pleine onde, et une même machine tournante peut être commandée par l'intermédiaire de plusieurs signaux en fonction de la vitesse de rotation à laquelle on souhaite faire tourner la machine tournante.

Une telle machine tournante présente alors une vitesse ou une plage de vitesse dite de transition, au cours de laquelle la commande de la machine tournante passe d'une première commande à une deuxième commande, autrement dit d'un premier signal à un deuxième signal. Au cours de cette transition, il peut être observé un phénomène de « chute de couple », qui correspond à une baisse significative du couple mécanique utilisable par ledit véhicule, ce qui peut occasionner une gêne pour le conducteur qui perçoit cette chute de couple inattendue. Le phénomène est identique dans le cas d'un véhicule comprenant un dispositif d'entrainement comprenant deux machines tournantes.

L'invention vise à remédier tout ou partie des inconvénients de l'état de la technique en proposant un dispositif d'entrainement commandé par au moins deux commandes, dont la chute de couple est sensiblement atténuée quelque soit la vitesse de transition de la machine tournante d'un tel dispositif.

### PRESENTATION DE L'INVENTION

Plus précisément, l'invention a pour objet un dispositif d'entrainement mécanique configuré entrainer en rotation un élément de transmission comprenant :
- une première machine tournante reliée à l'élément de transmission selon un premier rapport de transmission, la première machine tournante présentant une première vitesse de transition prédéterminée ;
- une deuxième machine tournante reliée à l'élément de transmission selon un deuxième rapport de transmission, la deuxième machine tournante présentant une deuxième vitesse de transition prédéterminée distincte de la première vitesse de transition ;
- un module de contrôle configuré pour transmettre une commande de vitesse parmi une première commande et une deuxième commande à la première machine et à la deuxième machine, le passage d'une commande à l'autre commande transmise à la première machine tournante étant fonction de la première vitesse de transition et le passage d'une commande à l'autre commande transmise à la deuxième machine tournante étant fonction de la deuxième vitesse de transition.

Grâce à une telle combinaison de caractéristiques, un tel dispositif d'entrainement munis de deux machines tournantes présentant des vitesses de transition prédéterminées distinctes permet de lisser une chute d'un couple mécanique résultant d'un couple mécanique généré par la première machine tournante avec un couple mécanique généré par la deuxième machine tournante. En effet, lorsque la première machine tournante passe d'une commande à l'autre commande, occasionnant une chute de couple de la première machine tournante, la deuxième machine tournante ne subit pas de chute de couple, de sorte que le couple résultant est lissé. Par le vocable « chute de couple », on entend toute diminution du couple mécanique jusqu'à 40% observée pour un temps de passage d'une commande à l'autre commande. De la même manière, lorsque la deuxième machine tournante passe d'une commande à l'autre commande, occasionnant une chute de couple de la deuxième machine tournante, la première machine tournante ne subit pas de chute de couple, de sorte que le couple résultant est également lissé. Par le vocable « lissé », on entend une atténuation remarquable de la chute de couple, permettant notamment de réduire l'inconfort généré par la chute de couple pour un utilisateur d'un véhicule comprenant un tel dispositif d'entrainement. Il a été expérimenté qu'un tel dispositif d'entrainement permet notamment d'atténuer d'environ 30% la chute de couple résultant.

Un avantage de l'invention est d'améliorer la robustesse et la sécurité en fournissant une redondance des machines tournantes.

Avantageusement, lequel le premier rapport de transmission est distinct du deuxième rapport de transmission. Dans une telle configuration, les deux machines tournantes peuvent par exemple transmettre un couple identique, chaque machine tournant à une vitesse de rotation différente.

Avantageusement, le deuxième rapport de transmission est le résultat du produit entre le premier rapport de transmission et un coefficient de transmission inférieur à 0,6.

Avantageusement, la première vitesse de transition est le résultat du produit entre la deuxième vitesse de transition et un coefficient de vitesse inférieur à 0,6. Dans une telle configuration, on garantit que les vitesses de transitions des machines sont distinctes. Par ailleurs, un tel dimensionnement permet exemple de faire coïncider la deuxième vitesse de transition de la deuxième machine tournante avec un point de fonctionnement idéal de la première machine tournante auquel le couple généré par la première machine est stable, de manière à atténuer encore la chute de couple.

Avantageusement, la première commande est un signal à modulation de largeur d'impulsions et la deuxième commande est un signal pleine onde. La modulation de largeur d'impulsions est couramment désignée en anglais « Pulse Width Modulation (PWM) » par l'homme du métier. Un signal pleine onde est couramment désignée en anglais « Full Wave » par l'homme du métier.

Avantageusement, le module de contrôle est configuré pour transmettre à la première machine tournante la première commande dans le cas où la première machine tournante tourne à une vitesse inférieure à la première vitesse de transition et configuré pour transmettre à la première machine tournante la deuxième commande dans le cas où la première machine tournante tourne à une vitesse supérieure à la première vitesse de transition.

Avantageusement, le module de contrôle est configuré pour transmettre à la deuxième machine tournante la deuxième commande dans le cas où la deuxième machine tournante tourne à une vitesse inférieure à la deuxième vitesse de transition et configuré pour transmettre à la deuxième machine tournante la deuxième commande dans le cas où la deuxième machine tournante tourne à une vitesse supérieure à la première vitesse de transition.

Avantageusement, la première machine tournante et la deuxième machine tournante sont des moteurs électriques.

Avantageusement, lequel le module de contrôle est un onduleur relié à des phases de la première machine tournante et à des phases de la deuxième machine tournante.

Selon un autre aspect de l'invention, celle-ci a trait à un engin de mobilité comprenant un dispositif d'entrainement tel que décrit ci-dessus.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique d'un dispositif d'entrainement selon un mode de réalisation de l'invention ;
La figure 2 est un graphique illustrant des courbes caractéristiques vitesse-couple d'une première machine tournante du dispositif d'entrainement, d'une deuxième machine tournante du dispositif d'entrainement, et du dispositif d'entrainement de la figure 1.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

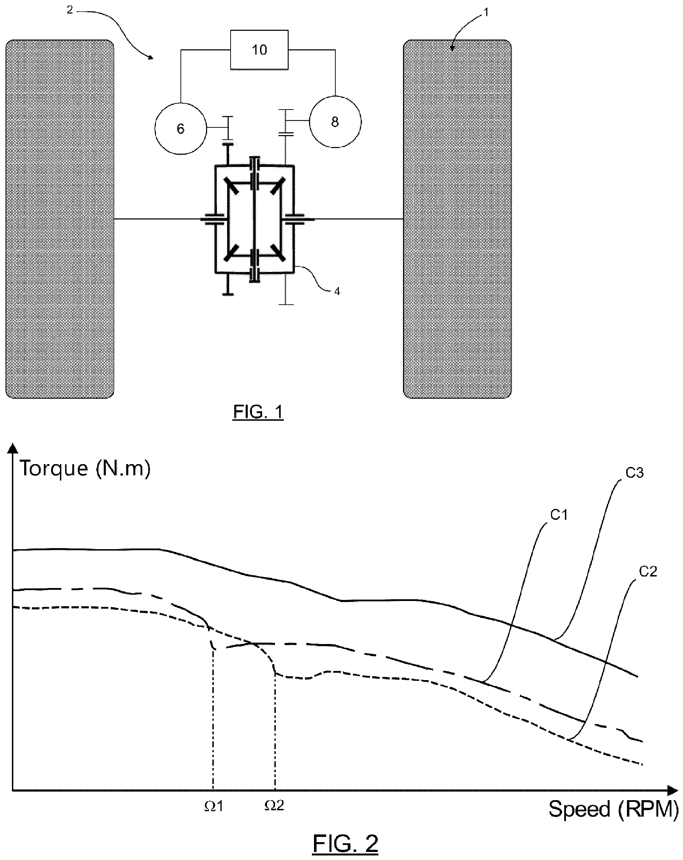

L'invention concerne un dispositif d'entrainement 2, notamment configuré pour entrainer en rotation un élément de transmission 4, par exemple un différentiel entrainant des roues d'un véhicule 1, comme illustré sur la figure 1. Le dispositif d'entrainement 2 comprend une première machine tournante 6 reliée à l'élément de transmission 4. La première machine tournante 6 est configurée pour générer un premier couple mécanique C1 et transmettre ce premier couple mécanique C1 à l'élément de transmission 4 selon un premier rapport de transmission.

Le dispositif d'entrainement 2 comprend une deuxième machine tournante 8 reliée à l'élément de transmission 4. La deuxième machine tournante 8 est configurée pour générer un deuxième couple mécanique C2 et transmettre ce deuxième couple mécanique C2 à l'élément de transmission 4 selon un deuxième rapport de transmission. Avantageusement, le premier rapport de transmission est distinct du deuxième rapport de transmission. Dans une telle configuration, les deux machines tournantes peuvent par exemple transmettre un même couple mécanique C1, C2 bien que chaque machine tournante 6,8 tourne à une vitesse différente.

Le dispositif d'entrainement 2 transmet ainsi à l'élément de transmission 4 un couple mécanique C3 résultant du premier couple mécanique et du deuxième couple mécanique.

Dans le mode de réalisation décrit sur la figure 1, le véhicule 1 peut notamment être un véhicule électrique ou hybride. Dans une telle configuration, la première machine tournante 6 et la deuxième machine tournante 8 sont avantageusement des moteurs électriques.

Pour être piloté par un utilisateur, le dispositif d'entrainement 2 comprend un module de contrôle 10. Le module de contrôle est configuré pour transmettre une commande de vitesse à la première machine tournante 6 et à la deuxième machine tournante 8. Dans le mode de réalisation décrit sur la figure 1, le module de contrôle 10 est de préférence un convertisseur de tension tel qu'un onduleur, relié à des phases de la première machine tournante 6 et à des phases de la deuxième machine tournante 8.

La commande de vitesse est choisie parmi une première commande et une deuxième commande. La commande de vitesse transmise à chaque machine tournante est fonction d'une vitesse de transition de la machine en question. Ainsi, la première machine tournante 6 présente une première vitesse de transition Ω1. De la même manière, la deuxième machine tournante 8 présente une deuxième vitesse de transition Ω2. Le passage d'une commande à l'autre commande transmise à la première machine tournante 6 est alors fonction de la première vitesse de transition Ω1. Le passage d'une commande à l'autre commande transmise à la deuxième machine tournante 8 est alors fonction de la deuxième vitesse de transition Ω2. Les deux vitesses de transition Ω1, Ω2 sont distinctes.

Avantageusement, la première vitesse de transition Ω1 est le résultat du produit entre la deuxième vitesse de transition Ω2 et un coefficient de vitesse inférieur à 0,6. Dans une telle configuration, on garantit que les vitesses de transitions Ω1, Ω2 des machines tournantes 6,8 sont distinctes. Par ailleurs, un tel dimensionnement permet par exemple de faire coïncider la deuxième vitesse de transition Ω2 de la deuxième machine tournante 8 avec un point de fonctionnement idéal de la première machine tournante 6, auquel le premier couple mécanique C1 généré par la première machine 6 est stable, permettant d'atténuer encore la chute de couple.

Le passage d'une commande à l'autre commande peut avantageusement être réalisé précisément lorsque la machine tournante 6,8 atteint exactement la vitesse de transition Ω1, Ω2. Alternativement, le passage d'une commande à l'autre commande peut être réalisé lorsque la vitesse de rotation de la machine tournante 6,8 se situe dans une plage comprenant la vitesse de transition Ω1, Ω2 par exemple se situe entre 0,95 fois la vitesse de transition et 1,05 fois la vitesse de transition Ω1, Ω2.

La figure 2 illustre des courbes caractéristiques vitesse-couple représentant l'évolution du premier couple mécanique C1, du deuxième couple mécanique C2 et du couple résultant C3 en fonction de la vitesse de rotation de la première machine tournante 6 et de la deuxième machine tournante 8.

Lorsque la première machine tournante 6 passe d'une commande à l'autre commande, une chute du premier couple mécanique C1 de la première machine tournante 6 est observée, pour une vitesse de rotation égale à la vitesse de transition Ω1. De la même manière, lorsque la deuxième machine tournante 8 passe d'une commande à l'autre commande, une chute du deuxième couple mécanique C2 de la deuxième machine tournante 8 est observée, pour une vitesse de rotation égale à la vitesse de transition Ω2.

Le dispositif d'entrainement 2 permet ainsi avantageusement de lisser la chute de couple observée respectivement sur la courbe caractéristique du premier couple mécanique C1 et la courbe caractéristique du deuxième couple mécanique C2. En effet, en associant la première machine tournante 6 et la deuxième machine tournante 8 sur un même élément de transmission, la courbe caractéristique du couple résultant C3 se voit lissée, c'est-à-dire que les chutes de couples constatées sont atténuées, de l'ordre d'environ 40%.

Ainsi, l'inconfort généré par la chute de couple pour un utilisateur du véhicule 1 comprenant un tel dispositif d'entrainement 2 est sensiblement réduit.

Les courbes de la figure 2 illustrent un mode de réalisation dans lequel la première commande est notamment un signal à modulation de largeur d'impulsions et la deuxième commande est un signal pleine onde. La modulation de largeur d'impulsions est couramment désignée en anglais « Pulse Width Modulation (PWM) » par l'homme du métier. L'onde pleine est couramment désignée en anglais « Full Wave » par l'homme du métier.

Le module de contrôle 10 est alors configuré pour transmettre à la première machine tournante 6 la première commande dans le cas où la première machine tournante 6 tourne à une vitesse inférieure à la première vitesse de transition Ω1. Le module de contrôle 10 est également configuré pour transmettre à la première machine tournante 6 la deuxième commande dans le cas où la première machine tournante 6 tourne à une vitesse supérieure à la première vitesse de transition Ω1.

En outre, le module de contrôle 10 est configuré pour transmettre à la deuxième machine tournante 8 la deuxième commande dans le cas où la deuxième machine tournante 8 tourne à une vitesse inférieure à la deuxième vitesse de transition Ω2. Le module de contrôle 10 est également configuré pour transmettre à la deuxième machine tournante 8 la deuxième commande dans le cas où la deuxième machine tournante tourne à une vitesse supérieure à la première vitesse de transition Ω1.

On notera par ailleurs que l'invention n'est pas limitée aux modes de réalisation décrit précédemment. Il apparaîtra en effet à l'homme du métier que diverses modifications peuvent être apportées au mode de réalisation décrit ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme du métier en appliquant ses connaissances générales à la mise en oeuvre de l'enseignement qui vient de lui être divulgué.

## Revendications

1. Dispositif d'entrainement (2) mécanique configuré entrainer en rotation un élément de transmission (4) comprenant :
- une première machine tournante (6) reliée à l'élément de transmission (4) selon un premier rapport de transmission, la première machine tournante (4) présentant une première vitesse de transition (Ω1) prédéterminée ;
- une deuxième machine tournante (8) reliée à l'élément de transmission (4) selon un deuxième rapport de transmission, la deuxième machine tournante (8) présentant une deuxième vitesse de transition (Ω2) prédéterminée distincte de la première vitesse de transition (Ω1) ;
- un module de contrôle (10) configuré pour transmettre une commande de vitesse parmi une première commande et une deuxième commande à la première machine (6) et à la deuxième machine (8), le passage d'une commande à l'autre commande transmise à la première machine tournante (6) étant fonction de la première vitesse de transition (Ω1) et le passage d'une commande à l'autre commande transmise à la deuxième machine tournante (8) étant fonction de la deuxième vitesse de transition (Ω2).

2. Dispositif d'entrainement (2) selon la revendication 1, dans lequel le premier rapport de transmission est distinct du deuxième rapport de transmission.

3. Dispositif d'entrainement (2) selon la revendication 2, dans lequel le deuxième rapport de transmission est le résultat du produit entre le premier rapport de transmission et un coefficient de transmission inférieur à 0,6.

4. Dispositif d'entrainement (2) selon l'une quelconque des revendications précédentes, dans lequel la première vitesse de transition (Ω1) est le résultat du produit entre la deuxième vitesse de transition (Ω2) et un coefficient de vitesse inférieur à 0,6.

5. Dispositif d'entrainement (2) selon l'une quelconque des revendications précédentes, dans lequel la première commande est un signal à modulation de largeur d'impulsions et la deuxième commande est un signal pleine onde.

6. Dispositif d'entrainement (2) selon la revendication 5, dans lequel le module de contrôle (10) est configuré pour transmettre à la première machine tournante (6) la première commande dans le cas où la première machine tournante (6) tourne à une vitesse inférieure à la première vitesse de transition (Ω1) et configuré pour transmettre à la première machine tournante (6) la deuxième commande dans le cas où la première machine tournante (6) tourne à une vitesse supérieure à la première vitesse de transition (Ω1).

7. Dispositif d'entrainement (2) selon la revendication 5 ou 6, dans lequel le module de contrôle (10) est configuré pour transmettre à la deuxième machine tournante (8) la deuxième commande dans le cas où la deuxième machine tournante (8) tourne à une vitesse inférieure à la deuxième vitesse de transition (Ω2) et configuré pour transmettre à la deuxième machine tournante (8) la deuxième commande dans le cas où la deuxième machine tournante (8) tourne à une vitesse supérieure à la deuxième vitesse de transition (Ω2).

8. Dispositif d'entrainement (2) selon l'une quelconque des revendications précédentes, dans lequel la première machine tournante (6) et la deuxième machine tournante (8) sont des moteurs électriques.

9. Dispositif d'entrainement (2) selon la revendication 8, dans lequel le module de contrôle (10) est un onduleur relié à des phases de la première machine tournante (6) et à des phases de la deuxième machine tournante (8).

10. Véhicule (1) électrique ou hybride, comprenant un dispositif d'entrainement (2) selon l'une quelconque des revendications 1 à 9.
